# EUROPÄISCHE PATENTANMELDUNG

(11) **EP 3 216 621 A1**
(43) Veröffentlichungstag der Anmeldung: **13.09.2017**
(21) Anmeldenummer: 17159447.6
(22) Anmeldetag: 06.03.2017
(51) Int. Cl.: B44C 1/24, B44C 5/04, B44F 9/02, B27D 1/08, B27D 1/00, B27D 5/00, B27M 3/00, B32B 21/02

(54) **VERFAHREN ZUR HERSTELLUNG VON RELIEFPLATTEN MIT HIRNHOLZMOTIV**

(30) Priorität: 10.03.2016 DE 102016104432
(71) Anmelder: VD Werkstätten GmbH & Co. KG, 32107 Bad Salzuflen (DE)
(72) Erfinder: VIETMEYER, Thomas, 32105 Bad Salzuflen (DE)
(74) Vertreter: Specht, Peter

(57) **Zusammenfassung**

Ein Verfahren, mit dem eine Reliefplatte für den Innenausbau oder den Möbelbau hergestellt und oberflächenstrukturiert wird, mit folgenden Verfahrensschritten: Bereitstellen einer Presse mit einem Presstempel, eines plattenförmigen, oberflächenstrukturierten Frontwerkzeugs (1), wobei das strukturierte Frontwerkzeug (1) als Struktur ein Hirnholzrelief (8) mit Jahresringen eines Baumstammes aufweist, und eines plattenförmigen Rückwerkzeugs (7); Bereitstellen eines ersten Außenfurniers (2), wenigstens eines ersten Blindfurniers (3), einer Trägerplatte (4), wenigstens eines zweiten Blindfurniers (5), und eines zweiten Außenfurniers (6), Verpressen eines geschichteten Stapels, bestehend aus dem ersten Außenfurnier (2), dem ersten Blindfurnier (3), der Trägerplatte (4), dem zweiten Blindfurnier (5) sowie dem zweiten Außenfurnier (6) zwischen dem strukturierten Frontwerkzeug (1) und dem ebenen Rückwerkzeug (6) mit der Presse zu der Reliefplatte (9), die auf einer Seite eine hirnholzartige Oberflächenstruktur aufweist; und Bedrucken der verprägten Reliefplatte (9) auf der Seite mit der hirnholzartigen Oberflächenstruktur mit einem Hirnholzbild (10) eines Baumstammes mit einem Druckverfahren.

## Beschreibung

Die Erfindung betrifft ein Verfahren, mit dem eine Reliefplatte für den Innenausbau oder den Möbelbau oder dgl., hergestellt wird.

Solche Reliefplatten werden hauptsächlich dazu eingesetzt, um Innenwänden, Raumteilern oder Möbeloberflächen ein Aussehen von alten oder antiken Holzstrukturen mit einer dreidimensionalen, authentischen Oberflächenstruktur und mit einer entsprechenden authentischen Optik zu geben.

Aus der EP 2 801 456 A1 derselben Anmelderin ist ein Verfahren der Oberflächenstrukturierung von Paneelen, Möbelbauplatten oder dergleichen bekannt, bei dem ein mit Ausnehmungen versehenes Furnier mit einer durchgefärbten Platte verpresst wird. Durch dieses Verfahren ist es möglich, Paneele oder Möbelbauplatten ein Aussehen von Holzstrukturen mit einer authentischen, dreidimensionalen Oberfläche zu geben, die der alter oder antiker Holzstrukturen entspricht. Dabei verläuft die Oberflächenstruktur wie eine Holzmaserung im Wesentlichen parallel zur Wachstumsrichtung des Holzes.

Es besteht allerdings auch ein Bedarf, Reliefplatten mit einer Hirnholzoptik herzustellen. Eine Hirnholzoptik im Sinne dieser Anmeldung ist eine Optik, die einer Optik entspricht, die entsteht, wenn man einen Holzstamm quer zur Haupterstreckungsrichtung durchschneidet. Dann sind Segmente der Jahresringe oder auch vollständige Jahresringe als Kreise zu sehen. Dabei soll die Ringstruktur einerseits dreidimensional - also nach Art von ringartigen Vertiefungen und Erhebungen, die den Jahresringen entsprechen - gegeben sein und andererseits auch optisch deutlich erkennbar sein.

Die Aufgabe der vorliegenden Erfindung liegt daher darin, ein Verfahren zu schaffen, mit dem eine Reliefplatte mit einer wenigstens einseitigen und zumindest abschnittsweise auf dieser Seite gegebenen Oberflächenstrukturierung hergestellt wird, die eine Struktur und eine Optik aufweist, welche der eines Hirnholzes sehr nahekommt.

Gelöst wird diese Aufgabe mit einem Verfahren, mit dem eine Reliefplatte für den Innenausbau oder Möbelbauplatten oder dergleichen, hergestellt und oberflächenstrukturiert wird, mit folgenden Verfahrensschritten:
a) Bereitstellen einer Presse mit einem Presstempel, eines plattenförmigen, oberflächenstrukturierten Frontwerkzeugs, wobei das strukturierte Frontwerkzeug als Struktur ein Hirnholzrelief nach Art von Jahresringen eines Baumstammes aufweist, und eines plattenförmigen Rückwerkzeugs,
b) Bereitstellen eines ersten Außenfurniers, wenigstens eines ersten Blindfurniers, einer Trägerplatte, wenigstens eines zweiten Blindfurniers, und eines zweiten Außenfurniers,
c) Verpressen eines geschichteten Stapels, bestehend aus dem ersten Außenfurnier, dem ersten Blindfurnier, der Trägerplatte, dem zweiten Blindfurnier sowie dem zweiten Außenfurnier zwischen dem strukturierten Frontwerkzeug und dem ebenen Rückwerkzeug mit der Presse zu der Reliefplatte, die nach dem Pressen auf einer Seite eine hirnholzartige Oberflächenstruktur aufweist; und
d) Bedrucken der verprägten Reliefplatte auf der Seite mit der hirnholzartigen Oberflächenstruktur mit einem Hirnholzbild eines Baumstammes mit einem Druckverfahren.

Durch das erfindungsgemäße Verfahren ist es vorteilhaft möglich, eine verprägte Reliefplatte, die z.B. als Paneel oder Möbelplatte verwendbar ist, mit einer Hirnholzoptik herzustellen, welche einerseits als Struktur im Holz-Außenfurnier ausgebildet ist und welche andererseits durch das Bedrucken vorteilhaft mit einem Hirnholzbild bzw. vorzugsweise einem Hirnholzphoto optimiert wird.

Die Kombination aus dem Pressen einer Hirnholzstruktur mit einem Überdrucken dieser Hirnholzstruktur mit einem möglichst ähnlich oder genau gleich strukturierten Hirnholzbild7-photo führt zu einer Platte mit einer Hirnholzoptik, die der eines echt aus einem Baumstamm quer geschnittenen Hirnholzes erstaunlich nahekommt.

Vorzugsweise wird das Foto der Schnittansicht (einer Baumstammscheibe) in Originalgröße aufgedruckt, die auch die Vorlage für die Oberflächenstrukturierung des Frontwerkzeuges war. Dann decken sich das Foto und das Relief bzw. die Strukturierung der Reliefplatte sehr genau und die Optik der Reliefplatte mit Bedruckung kommt der eines Hirnholzes besonders nahe.

Es ist ferner vorteilhaft, wenn sich nach dem Verfahrensschritt des Anspruchs 1 ein weiterer Verfahrensschritt anschließt, in dem wenigstens ein Trocknungsriss aus der verprägten Reliefplatte ausgefräst wird. Dadurch ergibt sich auf der verprägten Reliefplatte vorteilhaft eine noch authentischere, dreidimensionale Hirnholzoptik.

In einer bevorzugten Ausführungsvariante der Erfindung ist das erste Außenfurnier ein Holzfurnier, dessen Holzmaserung nicht die eines Hirnholzes ist sondern die einer senkrecht zur Hirnholzrichtung geschnittenen, d.h. parallel zur Wachstumsrichtung des Baumes, geschnittenen Platte. Dadurch kommt vorteilhaft ein handelsübliches und dadurch einfach zu beschaffendes Furnier zum Einsatz, das aber nach dem Durchlaufen des erfindungsgemäßen Verfahrens eine Optik aufweist, die der eines Hirnholzes sehr nahekommt. Die eigentliche Maserung parallel zum Baumstamm ist nach der Oberflächenstrukturierung zwar noch zu erkenn. Spätestens nach dem Aufdrucken des Photos mit der Hirnholzoptik ist sie aber nicht mehr zu erkennen bzw. tritt stark in den Hintergrund. Lediglich in Ecken außerhalb eines Hirnholzoptikbereiches kann sie noch sichtbar sein (wenn die Platte rechteckig ist).

Vorteilhaft ist, wenn das erste Außenfurnier ein Holzfurnier mit Astanteilen ist. Hierdurch wird eine Ansicht erzeugt, welche der eines Echtholzes noch näherkommt.

In einer weiteren bevorzugten Ausführungsvariante der Erfindung ist die Trägerplatte eine Platte aus einem Holzwerkstoff, vorzugsweise eine Holzfaserplatte, besonders bevorzugt eine mitteldichte Faserplatte (MDF).

Vorteilhaft ist, wenn das Digitaldruckverfahren ein Tintenstrahldruckverfahren mit UV-aushärtbarer Tinte ist. Dadurch lässt sich einfach, schnell und damit vorteilhaft ein fotorealistisches Hirnholzbild eines Baumstammes auf die mit einer Hirnholzprägung versehene verprägte Reliefplatte aufdrucken.

In einer weiteren bevorzugten Ausführungsvariante der Erfindung wird im Bereich eines Trocknungsrisses das erste Außenfurnier durch ein Ausfräsen vollständig entfernt, so dass wenigstens eine darunter liegende Schicht sichtbar wird.

Vorzugsweise wird eine Rauhigkeit von mehr als 1- 2 mm beim Pressen erreicht. Dazu beträgt der Pressstempeldruck vorzugsweise mehr als 300 kg/cm². Der Pressstempel weist weiter vorzugsweise eine Fläche von mehr als 2 m² auf.

Weitere vorteilhafte Ausgestaltungen der Erfindung können den Unteransprüchen entnommen werden.

Das erfinderische Verfahren wird nachfolgend mit Bezug auf die beigefügten Zeichnungen näher erläutert. Es zeigt:
- Figur 1:: eine schematische Darstellung des Schichtenaufbaus einer verprägten Reliefplatte, die nach dem erfinderischen Verfahren hergestellt werden soll;
- Figur 2:: eine fotoartige Darstellung eines Frontwerkzeuges mit einer über die gesamte Fläche oder einen Teil der Fläche vorgesehenen hirnholzartigen Prägestruktur;
- Figur 3a:: eine schematische Darstellung des Schichtenaufbaus einer mit Hilfe des Frontwerkzeugs nach Fig. 2 verprägten Reliefplatte;
- Figur 3b:: eine fotoähnliche Draufsicht auf eine Frontseite einer verprägten Reliefplatte nach Fig. 3a mit einer Hirnholzreliefstruktur;
- Figur 4a:: eine Reliefplatte nach Art der Fig. 3b, die mit einem Hirnholzbild/-Foto eines Baumstamms bedruckt wurde;
- Figur 4b:: eine Fotografie eines Hirnholzes;
- Figur 5:: eine Reliefplatte mit einem aufgedruckten Hirnholzbild, bei der Trocknungsrisse im Hirnholzbild ausgefräst worden sind.

In einem ersten Verfahrensschritt des erfindungsgemäßen Verfahrens wird eine Presse (hier nicht dargestellt) mit einem Presstempel, versehen bzw. ausgerüstet mit einem strukturierten plattenartigen Frontwerkzeug 1 und einem vorzugsweise nicht strukturierten plattenartigen Rückwerkzeug 7 bereitgestellt.

Es werden ferner ein erstes Außenfurnier 2, wenigstens ein erstes Blindfurnier 3, eine Trägerplatte 4, wenigstens ein zweites Blindfurnier 5 und ein zweites Außenfurnier 6 bereitgestellt und zwischen dem Presstempel mit dem Frontwerkzeug 1 und dem Rückwerkzeug (Pressentisch) angeordnet.

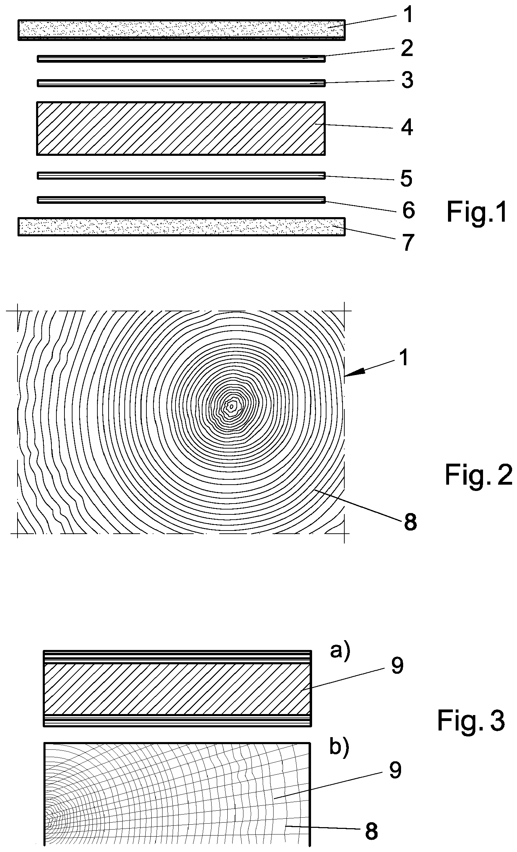

Das plattenförmige Frontwerkzeug 1 weist als Struktur eine Reliefstruktur nach Art eines Hirnholzreliefs 8 auf (siehe Fig. 2). Die Strukturierung des Frontwerkzeuges 1 weist auf das erste Außenfurnier 2. Das Frontwerkzeug 1 ist vorzugsweise aus einem Metall hergestellt.

Als Furniere kommen (Echt-)Holzfurniere zum Einsatz.

Als das erste Außenfurnier 2 kommt vorzugsweise ein Holzfurnier zum Einsatz, dessen Holzmaserung parallel zur Wachstumsrichtung des Baumes liegt. Vorzugsweise handelt es sich bei dem ersten Außenfurnier 2 um ein Holzfurnierbeispielsweise ein Eichenfurnier - mit Astanteilen, um einen ansprechenden visuellen Grundeindruck auf der herzustellenden verprägten Reliefplatte 9 zu erzielen, die als Paneel oder Möbelplatte verwendbar ist. Alternativ können auch Deckfurniere aus anderen Holzarten hergestellt sind, verwendet werden.

Als das wenigstens eine erste Blindfurnier 3 wird ebenfalls ein Holzfurnier gewählt.

Als Trägerplatte 4 ist eine Platte aus einem Holzwerkstoff, vorzugsweise eine Holzfaserplatte, besonders bevorzugt eine mitteldichte Faserplatte (MDF) vorgesehen. Diese kann eine dunkle, besonders bevorzugt eine dunkelbraune oder schwarze Oberfläche aufweisen.

Das zweite Blindfurnier 5 und das zweite Außenfurnier 6 entsprechen hier dem ersten Blindfurnier 3 bzw. dem ersten Außenfurnier 2. Dies ist vorteilhaft jedoch nicht zwingend.

Das plattenförmige Rückwerkzeug 7 ist im Gegensatz zum Frontwerkzeug 1 vorzugsweise nicht strukturiert, sondern glatt bzw. eben. Das Rückwerkzeug 7 ist aus einem Metall hergestellt.

In einem nächsten Verfahrensschritt wird ein in Fig. 1 dargestellter, geschichteter Stapel, bestehend aus dem ersten Außenfurnier 2, dem ersten Blindfurnier 3, der Trägerplatte 4, dem zweiten Blindfurnier 5 sowie dem zweiten Außenfurnier 6 zwischen das strukturierte Frontwerkzeug 1 und das ebene Rückwerkzeug 6 der Presse gelegt. Sodann wird der Pressvorgang durchgeführt. Dadurch entsteht eine verprägten Reliefplatte 9 (siehe Fig. 3a) mit einem zumindest abschnittsweise vorgesehenen Hirnholzrelief 8 als einseitige Strukturverprägung, wie in Fig. 3b dargestellt. Allerdings ist die ursprüngliche Maserung hier ebenfalls noch bzw. noch zu stark zu erkennen. Die Platte ist daher noch nicht für den Möbelbau verwendbar.

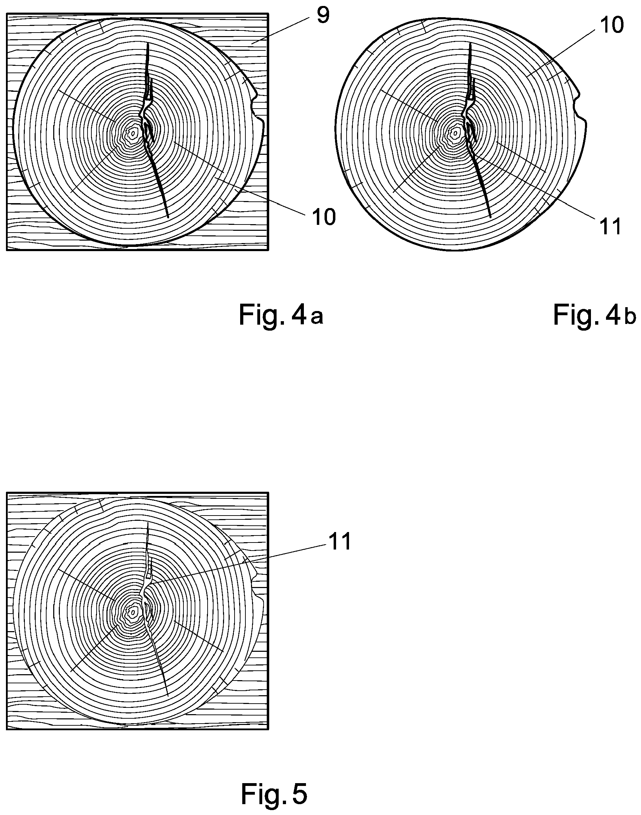

In einem weiteren Verfahrensschritt wird daher ein Hirnholzbild 10 - vorzugsweise ein Foto - eines Baumstammes (siehe Fig. 4a) auf die verprägte und oberflächenstrukturierte Reliefplatte 9 gedruckt (Fig. 4b). Jetzt tritt die ursprüngliche Maserung in den Hintergrund. Die Kombination aus Relief und Foto führt zu einer Reliefplatte mit Hirnholzoptik und -struktur, die für den Möbelbau hervorragend geeignet ist, wenn an einem Möbel diese Optik gewünscht ist.

Als Druckverfahren kommt dabei vorzugsweise ein Digitaldruckverfahren, besonders bevorzugt ein Tintenstrahldruckverfahren mit UV-aushärtbarer Tinte zum Einsatz. Durch das Zusammenspiel zwischen der Bedruckung mit dem Hirnholzbild 10 und dem durch das Frontwerkzeug 1 strukturierten ersten Außenfurnier 2 ergibt sich auf der verprägten Reliefplatte 9 ein dreidimensionales und damit authentisches Aussehen eines Baumstammes mit Hirnholzoptik.

Vorzugsweise weisen das Hirnholzbild 10 (und/oder das Relief bzw. der Prägestempel) wenigstens einen Trocknungsriss 11 auf. In einem weiteren Verfahrensschritt wird in der mit dem Hirnholzbild 10 bedruckten, verprägten Reliefplatte 9 der Trocknungsriss 11 ausgefräst (siehe Fig. 5). Dies führt zu einer noch optimaleren Optik, insbesondere, wenn der Trocknungsriss durch Fräsen vertieft wird.

Dabei wird im Bereich des Trocknungsrisses 11 vorzugsweise das erste Außenfurnier 2 vollständig entfernt, so dass das darunter liegende erste Blindfurnier 3 und/oder die Trägerplatte 4 sichtbar wird. Durch die vorzugsweise dunkle Oberfläche der Trägerplatte 4 ergibt sich in der bedruckten und verprägten Reliefplatte 9 ein dreidimensionales und damit authentisches Aussehen des Trocknungsrisses 11.

Durch das erfindungsgemäße Verfahren ist es vorteilhaft möglich, eine Oberflächenstrukturierung von plattenförmigen Bauteilen, insbesondere einer verprägte Reliefplatte 9, die z.B. als Paneel oder Möbelplatte verwendbar ist, mit einer authentischen, dreidimensionalen Hirnholzoptik herzustellen.

### Bezugszeichenliste

- 1: Frontwerkzeug
- 2: Außenfurnier
- 3: Blindfurnier
- 4: Trägerplatte
- 5: Blindfurnier
- 6: Außenfurnier
- 7: Rückwerkzeug
- 8: Hirnholzrelief
- 9: Verprägte Reliefplatte
- 10: Hirnholzbild
- 11: Trocknungsriß

## Patentansprüche

1. Verfahren, mit dem eine Reliefplatte für den Innenausbau oder den Möbelbau oder dergleichen, hergestellt und oberflächenstrukturiert wird, mit folgenden Verfahrensschritten:
a) Bereitstellen
a. einer Presse mit einem Presstempel,
b. eines plattenförmigen, oberflächenstrukturierten Frontwerkzeugs (1), wobei das strukturierte Frontwerkzeug (1) als Struktur ein Hirnholzrelief (8) mit Jahresringen eines Baumstammes aufweist, und
c. eines plattenförmigen Rückwerkzeugs (7);
b) Bereitstellen
a. eines ersten Außenfurniers (2),
b. wenigstens eines ersten Blindfurniers (3),
c. einer Trägerplatte (4),
d. wenigstens eines zweiten Blindfurniers (5), und
e. eines zweiten Außenfurniers (6)
c) Verpressen eines geschichteten Stapels, bestehend aus dem ersten Außenfurnier (2), dem ersten Blindfurnier (3), der Trägerplatte (4), dem zweiten Blindfurnier (5) sowie dem zweiten Außenfurnier (6) zwischen dem strukturierten Frontwerkzeug (1) und dem ebenen Rückwerkzeug (6) mit der Presse zu der Reliefplatte (9), die auf einer Seite eine hirnholzartige Oberflächenstruktur aufweist; und
d) Bedrucken der verprägten Reliefplatte (9) auf der Seite mit der hirnholzartigen Oberflächenstruktur mit einem Hirnholzbild (10) eines Baumstammes mit einem Druckverfahren.

2. Verfahren nach Anspruch 1, **dadurch gekennzeichnet, dass** als das Druckverfahren ein Digitaldruckverfahren angewendet wird.

3. Verfahren nach Anspruch 1 oder 2, **dadurch gekennzeichnet, dass** das Foto der Schnittansicht als Hirnholzbild aufgedruckt wird, die auch die Vorlage für die Oberflächenstrukturierung des Frontwerkzeuges war, derart, dass sich das Foto und das Relief bzw. die Strukturierung der Reliefplatte decken.

4. Verfahren nach Anspruch 1, 2 oder 3, **dadurch gekennzeichnet, dass** das Hirnholzbild (10) wenigstens einen oder mehrere Trocknungsrisse (11) aufweist.

5. Verfahren nach einem der vorstehenden Ansprüche, **dadurch gekennzeichnet, dass** sich an die Verfahrensschritte des Anspruchs 1 ein weiterer Verfahrensschritt anschließt, in dem ein Trocknungsriss (11) aus der verprägten Reliefplatte (9) ausgefräst wird.

6. Verfahren nach einem der vorgenannten Ansprüche, **dadurch gekennzeichnet, dass** die Strukturierung des Frontwerkzeuges (1) bei dem Pressen in Richtung des ersten Außenfurniers (2) weist.

7. Verfahren nach einem der vorgenannten Ansprüche, **dadurch gekennzeichnet, dass** das erste Außenfurnier (2) ein Holzfurnier ist, an dessen Hauptaußenflächen eine Holzmaserung parallel zur Wachstumsrichtung des Baumes erkennbar und ausgebildet ist.

8. Verfahren nach einem der vorgenannten Ansprüche, **dadurch gekennzeichnet, dass** das erste Außenfurnier (2) ein Holzfurnier mit Astanteilen ist.

9. Verfahren nach einem der vorgenannten Ansprüche, **dadurch gekennzeichnet, dass** das erste Blindfurnier (3) ist ein Blindfurnier ist, dass vorzugsweise eine dunkle, besonders bevorzugt eine dunkelbraune oder schwarze Oberfläche aufweist.

10. Verfahren nach einem der vorgenannten Ansprüche, **dadurch gekennzeichnet, dass** die Trägerplatte (4) eine Platte aus einem Holzwerkstoff, vorzugsweise eine Holzfaserplatte, besonders bevorzugt eine mitteldichte Faserplatte (MDF) ist.

11. Verfahren nach einem der vorgenannten Ansprüche, **dadurch gekennzeichnet, dass** als das Digitaldruckverfahren ein Tintenstrahldruckverfahren mit UV-aushärtbarer Tinte verwendet wird.

12. Verfahren nach einem der vorgenannten Ansprüche, **dadurch gekennzeichnet, dass** im Bereich des Trocknungsrisses (11) das erste Außenfurnier (2) durch das Ausfräsen vollständig entfernt wird, so dass das darunter liegende erste Blindfurnier (3) sichtbar wird.

13. Verfahren nach einem oder mehreren der vorangehenden Ansprüche,
**dadurch gekennzeichnet, dass** der Pressstempeldruck mehr als 300 kg/cm² beträgt.

14. Verfahren nach einem oder mehreren der vorangehenden Ansprüche,
**dadurch gekennzeichnet, dass** der Pressstempel eine Fläche von mehr als 2 m² aufweist.
